# EUROPEAN PATENT APPLICATION

(11) **EP 4 502 240 A1**
(43) Date of publication of application: **05.02.2025**
(21) Application number: 23780562.7
(22) Date of filing: 28.03.2023
(51) Int. Cl.: C25B 15/02

(54) **INFORMATION PROCESSING DEVICE, ELECTROLYSIS DEVICE, PLAN CREATION METHOD, AND PROGRAM**

(30) Priority: 31.03.2022 JP 2022058142
(71) Applicant: Asahi Kasei Kabushiki Kaisha, Tokyo 1000006 (JP)
(72) Inventor: OHNO Jun, Tokyo 100-0006 (JP); MORITA Kohei, Tokyo 100-0006 (JP); UCHINO Yousuke, Tokyo 100-0006 (JP); NAGINO Goshu, Tokyo 100-0006 (JP)
(74) Representative: dompatent von Kreisler Selting Werner - Partnerschaft von Patent- und Rechtsanwälten mbB
(86) International application number: PCT/JP2023/012583
(87) International publication number: WO 2023/190553

(57) **Abstract**

An information processing device that includes an acquisition unit and a control unit. The acquisition unit acquires a predicted value and a minimum required amount for supply of a target product. The predicted value is the predicted value of electrical power supplied to the electrolysis device. The control unit creates an operation plan corresponding to a number of stops and an electrical power per unit of production in a provisional operation plan in which the number of stops and the electrical power per unit of production of an electrolysis device satisfy a defined condition while using the predicted value or less of other electrical power and supplying the target product at the minimum required amount or more. The electrical power per unit of production is the power consumption of the electrolysis device divided by the amount of the target product supplied.

## Description

### CROSS-REFERENCE TO RELATED APPLICATION

The present application claims priority to and the benefit of Japanese Patent Application No. 2022-058142 filed March 31, 2022, the entire contents of which are incorporated herein by reference.

### TECHNICAL FIELD

The present disclosure relates to an information processing device, an electrolysis device, a plan creation method, and a program.

### BACKGROUND

For example, an electrolysis device that produces hydrogen as the target product by electrolysis of water is known (see Patent Literature (PTL) 1). An electrolysis device that uses renewable energy as input needs to stop electrolysis when input electrical power falls below the operating range of the electrolysis device, which increases the frequency of device stops, causing electrode members of the electrolysis device to degrade due to current cycling, and causing an increase in electrical power per unit of production, which is electrical power consumption of the electrolysis device divided by the amount of target product produced. Further, immediately after the start of electrical power supply to an electrolysis device, concentration of the target product is low and therefore, at such time, the target product cannot be supplied as a processed product even while electrical power is supplied. Therefore, the more times the electrolysis device is stopped relative to work time, the higher the electrical power per unit of production becomes.

### CITATION LIST

### Patent Literature

PTL 1: JP 2021-161472 A

### SUMMARY

### (Technical Problem)

In recent years, the use of only electrical power generated by a renewable energy source for electrolysis in an electrolysis device has been considered. Power generation based on renewable energy is unstable and can trigger unexpected electrolysis device stops. The increased number of stops of the electrolysis device increases the electrical power per unit of production due to electrode degradation and missed opportunities to supply the target product, increasing the electrical power required to produce the target product.

It would be helpful to provide an information processing device, an electrolysis device, a plan creation method, and a program that suppress degradation of an electrolyzer and suppress electrical power consumption per unit of production, while producing the target product at a minimum required amount or more.

### (Solution to Problem)

The present disclosure is as follows.
[1] An information processing device that creates an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the information processing device comprising:
   an acquisition unit configured to acquire a predicted value of electrical power to be supplied to the electrolysis device and a minimum required amount for supply of the target product; and
   a control unit configured to create the operation plan corresponding to a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times the electrolysis device switches from the drive mode to the stop mode and the electrical power per unit of production is power consumption of the electrolysis device divided by amount of target product supplied.
[2] The information processing device according to [1], above, wherein the defined condition is to minimize the electrical power per unit of production among at least one temporary operation plan in which the number of stops is minimized while using the predicted value or less of electrical power and supplying the target product at the minimum required amount or more.
[3] The information processing device according to [1], above, wherein the defined condition is to minimize an evaluation value EV = α × BUn/BUs + β × Nn/Ns, where BUs is the electrical power per unit of production and Ns is the number of stops in a temporary operation plan in which the electrical power per unit of production is minimized while using electrical power at the predicted value or less and supplying the target product at the minimum required amount or more, BUn is the electrical power per unit of production and Nn is the number of stops in each of a plurality of the operation plan that each use electrical power at the predicted value or less and supply the target product at the minimum required amount or more, and α and β are weighting factors greater than zero.
[4] The information processing device according to [1], above, wherein
   the defined condition is to minimize the number of stops and locally minimize the electrical power per unit of production while using electrical power at the predicted value or less and supplying the target product at the minimum required amount or more.
[5] The information processing device according to any one of [1] to [4], above, wherein
   the electrolysis device further has a start-up mode in which supply of the target product is stopped in the first state until the operation mode transitions to the drive mode.
[6] The information processing device according to [5], above, wherein
   the operation plan includes, for each of the at least one electrolysis device, at least one of time of switching from the stop mode to the start-up mode or current value to supply to an electrolyzer.
[7] The information processing device according to any one of [1] to [6], above, wherein
   the control unit is capable of creating the operation plan for a plurality of the electrolysis device,
   the electrical power per unit of production is the sum of the electrical power consumption of each of the plurality of the electrolysis device divided by the sum of the amount of the target product supplied by each of the plurality of the electrolysis device, and
   the number of stops is the sum of the number of stops for each of the plurality of the electrolysis device.
[8] The information processing device according to any one of [1] to [7], above, wherein
   upon acquiring an update of the predicted value, the control unit updates the operation plan.
[9] The information processing device according to any one of [1] to [8], above, wherein
   the control unit creates the operation plan corresponding to the sum of voltages in the operation plan that locally minimizes the sum of the voltages applied to electrolyzers of the at least one electrolysis device.
**[10]** The information processing device according to any one of [1] to [9], above, wherein
   the acquisition unit acquires a process state regarding an operation property from the at least one electrolysis device, and
   the control unit adjusts the current lower limit value or the electrical power lower limit value based on the process state so that a concentration of a gas in an electrolyzer of the at least one electrolysis device is an explosion lower limit or less.
[11] The information processing device according to any one of [1] to [10], above, wherein
   the predicted value of electrical power acquired by the acquisition unit includes a first amount of electrical power that can be supplied from a power generation facility using only renewable energy and an amount of electrical grid power that can be supplied from an electrical grid.
**[12]** At least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the electrolysis device comprising:
   an acquisition unit configured to acquire a predicted value of electrical power to be supplied to the electrolysis device and a minimum required amount for supply of the target product; and
   a control unit configured to create an operation plan corresponding to a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times switching from the drive mode to the stop mode and the electrical power per unit of production is power consumption of the electrolysis device divided by amount of target product supplied.
**[13]** A plan creation method of creating an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the plan creation method comprising:
   a step of acquiring a predicted value of electrical power to be supplied to the electrolysis device and a minimum required amount for supply of the target product;
   a step of calculating a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times the electrolysis device switches from the drive mode to the stop mode and the electrical power per unit of production is power consumption of the electrolysis device divided by amount of target product supplied; and
   a step of creating the operation plan corresponding to the number of stops and the electrical power per unit of production.
**[14]** A program configured to create an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the program causing a computer to execute operations comprising:
   acquiring a predicted value of electrical power to be supplied to the electrolysis device and a minimum required amount for supply of the target product;
   calculating a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the minimized number of times the electrolysis device switches from the drive mode to the stop mode and the electrical power per unit of production is power consumption of the electrolysis device divided by amount of target product supplied; and
   creating the operation plan corresponding to the number of stops and the electrical power per unit of production.

### (Advantageous Effect)

According to the present disclosure, electrical power consumption per unit of production is suppressed while producing hydrogen at a minimum required amount or more.

### BRIEF DESCRIPTION OF THE DRAWINGS

In the accompanying drawings:
FIG. 1 is a function block diagram schematically illustrating structure of a production system including an information processing device according to an embodiment;
FIG. 2 is a structural diagram of the electrolysis device of FIG. 1;
FIG. 3 is a diagram illustrating a locus of an approximation model for explaining how to find a minimum value of a dependent variable using response surface methodology;
FIG. 4 is a flowchart for explaining operation plan creation processing executed by the control unit of FIG. 1; and
FIG. 5 is a graph illustrating electrical power generated by solar cells at different times of day to illustrate stability of electrical power generated based on solar energy.

### DETAILED DESCRIPTION

The following is a detailed description of embodiments of the present disclosure. The present disclosure is not limited to the following embodiments, and variations may be implemented within the scope of the spirit of the present disclosure.

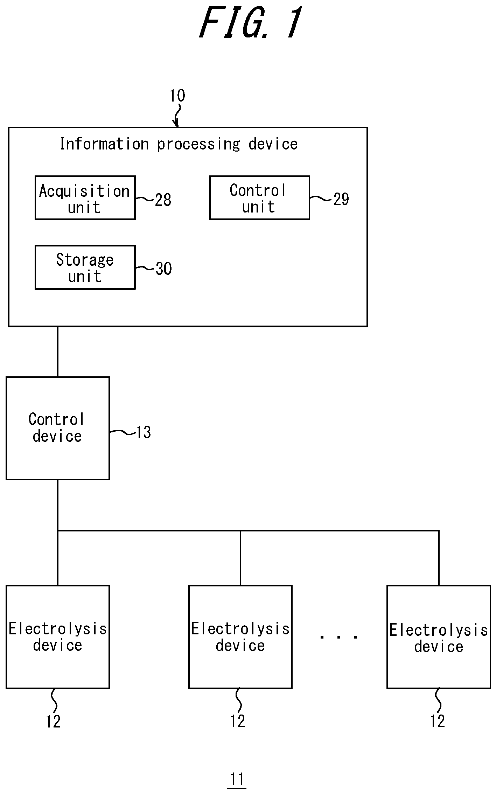

As illustrated in FIG. 1, a production system 11 including an information processing device 10 according to an embodiment of the present disclosure may include at least one electrolysis device 12, a control device 13, and the information processing device 10. According to the present embodiment, the production system 11 includes a plurality of the electrolysis device 12. The type of the electrolysis device 12 is not limited, and may be, for example, an alkaline water electrolysis device, a brine electrolysis device, a solid polymer type water electrolysis device, or a solid oxide type electrolysis device.

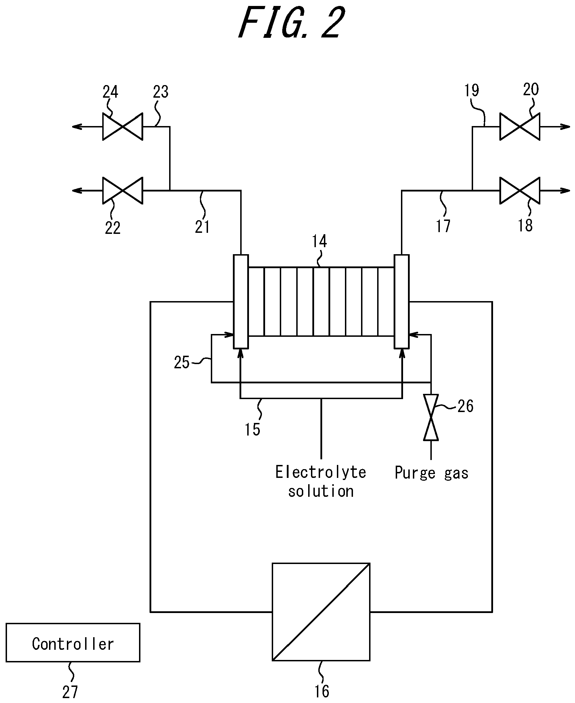

As illustrated in FIG. 2, the electrolysis device 12 may include an electrolyzer 14, an electrolyte solution supply channel 15, a rectifier 16, a first supply channel 17, a first supply valve 18, a first exhaust channel 19, a first exhaust valve 20, a second supply channel 21, a second supply valve 22, a second exhaust channel 23, a second exhaust valve 24, a purge gas supply channel 25, a purge gas supply valve 26, and a controller 27.

Electrolyte solution may be supplied to the electrolyzer 14 via the electrolyte supply channel 15. Electrolyte solution includes, for example, water or brine. Electrical power generated by a renewable energy generator may be supplied to the electrolyzer 14 with a current regulated by the rectifier 16. The electrolyzer 14 may, for example, electrolyze the electrolyte solution with applied electrical power to generate a cathode product and an anode product. In a configuration where the electrolyzer 14 electrolyzes water, the cathode product is hydrogen and the anode product is oxygen. In a configuration where the electrolyzer 14 electrolyzes brine, the cathode product is hydrogen and the anode product is chlorine.

The cathode product generated in a cathode chamber of the electrolyzer 14 may be discharged via the first supply channel 17. The first supply valve 18 may be provided to the first supply channel 17. By opening the first supply valve 18, the cathode product may be supplied as a processed product. The first supply channel 17 may be connected to the first exhaust channel 19 upstream of the first supply valve 18. The first exhaust valve 20 may be provided to the first exhaust channel 19. By opening the first exhaust valve 20, gas in the first supply channel 17 may be exhausted.

The anode product generated in an anode chamber of the electrolyzer 14 may be discharged via the second supply channel 21. The second supply valve 22 may be provided to the second supply channel 21. By opening the first supply valve 18, the anode product may be supplied as a processed product. The second supply channel 21 may be connected to the second exhaust channel 23 upstream of the second supply valve 22. The second exhaust valve 24 may be provided to the second exhaust channel 23. By opening the second exhaust valve 24, gas in the second supply channel 21 may be exhausted.

Purge gas may be supplied to the electrolyzer 14 via the purge gas supply channel 25. The purge gas supply valve 26 may be provided to the purge gas supply channel 25. By opening the purge gas supply valve 26, gas that remains in the electrolyzer 14 is discharged via the first supply channel 17 and the second supply channel 21. The purge gas is any nonflammable gas, for example nitrogen.

The controller 27 includes one or more processors and memory. Examples of the one or more processors include a general-purpose processor that is loaded with a specific program to execute a specific function, and a specialized processor dedicated to specific processing. The controller 27 may control overall operation of the electrolysis device 12.

The controller 27 may control each component of the electrolysis device 12. The controller 27 controls the rectifier 16, for example, to switch between applying and stopping electrical power to the electrolyzer 14 and to adjust the current value of the electrical power applied to the electrolyzer 14. Further, the controller 27 may, for example, separately open and close the first supply valve 18, the first exhaust valve 20, the second supply valve 22, the second exhaust valve 24, and the purge gas supply valve 26.

Further, the controller 27 may control each component of the electrolysis device 12 according to switching between a plurality of operation modes that the electrolysis device 12 has. The electrolysis device 12 has, for example, a stop mode and a drive mode as the operation modes. The electrolysis device 12 may further have a start-up mode, a pause mode, and a prepare-to-stop mode as operation modes.

In the stop mode, the electrolysis device 12 stops work of all components of the electrolysis device 12. The stop mode may be switched automatically from the prepare-to-stop mode described below, or from the drive mode, when an instruction to switch is acquired from the control device 13 described below.

In the stop mode, the controller 27 transitions the electrolysis device 12 to a state (second state) in which the supply to the electrolyzer 14 in the electrolysis device 12 of electrical power where current is at least a current lower limit value or electrical power that is at least an electrical power lower limit value is stopped. The current lower limit value and the electrical power lower limit value are described below. The controller 27 may control the first supply valve 18, the first exhaust valve 20, the second supply valve 22, the second exhaust valve 24, and the purge gas supply valve 26 to close after a certain amount of purge gas is supplied. In the stop mode, the electrolyzer 14, the first supply channel 17, the first exhaust channel 19, the second supply channel 21, and the second exhaust channel 23 may be kept filled with purge gas.

In the start-up mode, the electrolysis device 12 prepares to supply the cathode product as a processed product. The cathode product as a processed product is a gas that contains a concentration of the cathode product that is at least at a cathode product concentration threshold, and where a concentration of an impurity gas component is less than a separately required threshold. The start-up mode may be switched to when an instruction to switch is acquired from the control device 13 (described below) in the stop mode.

In the start-up mode, the controller 27 transitions the electrolysis device 12 to a first state in which electrical power where current is at least a current lower limit value or electrical power that is at least an electrical power lower limit value is supplied to the electrolyzer 14 in the electrolysis device 12. Specifically, the controller 27 transitions to the first state by controlling the rectifier 16. The controller 27 may initiate electrolysis in the electrolyzer 14 by transitioning to the first state. The controller 27 may open the first exhaust valve 20 and the second exhaust valve 24 to exhaust purge gas remaining in the electrolyzer 14, the first supply channel 17, and the second supply channel 21. The start-up mode may be executed and the supply of cathode product as a processed product may be stopped until transitioning to the drive mode described below.

In the drive mode, the electrolysis device 12 is in the first state and is capable of supplying cathode product as a processed product. The drive mode may be switched to from the start-up mode after cathode product concentration in gas in the first supply channel 17 becomes at least the cathode product concentration threshold and concentration of an impurity gas component is less than an impurity threshold. Switching to the drive mode may be based on a detection result of cathode product concentration in gas in the first supply channel 17 in the start-up mode, or based on a comparison result comparing elapsed time since the start-up mode began with a replacement time calculated in advance. The replacement time is the time from the start of electrolysis in the electrolyzer 14 to replacement in the first supply channel 17 with the cathode product.

In the drive mode, the controller 27 may close the first exhaust valve 20 and open the first supply valve 18. Further, after anode product concentration in gas in the second supply channel 21 becomes at least an anode product concentration threshold in the drive mode, the controller 27 may close the second exhaust valve 24 and open the second supply valve 22.

In the pause mode, the electrolysis device 12 temporarily stops electrolysis and the supply of cathode product and anode product as processed products. The pause mode may be switched to when a decrease in electrical power supplied in the drive mode makes it impossible to supply current greater than or equal to the lower limit value. Specifically, the controller 27 may close the first supply valve 18 and the second supply valve 22.

In the prepare-to-stop mode, the electrolysis device 12 prepares to stop in a safe state. The prepare-to-stop mode may be switched to when an instruction to switch is acquired from the control device 13 (described below) in the drive mode. Further, the prepare-to-stop mode may be switched to when a stop maintenance time has elapsed in the pause mode. The stop maintenance time may be a predetermined time period during which, from a safety viewpoint or from a design viewpoint of components of the electrolysis device 12, only electrolysis and supply of cathode product and anode product need be stopped while work of other components can be maintained. In the pause mode, when current supply is resumed before the stop maintenance time has elapsed, the drive mode may be switched to.

In the prepare-to-stop mode, the controller 27 closes the first supply valve 18 and the second supply valve 22 and opens the first exhaust valve 20, the second exhaust valve 24, and the purge gas supply valve 26. The electrolysis device 12 may transition to the stop mode after a defined time has elapsed since the switch to the prepare-to-stop mode.

The controller 27 may sample a process state regarding an operation property of the electrolyzer 14 and provide same to the information processing device 10. The process state of the electrolyzer 14 may include at least one of temperature of the electrolyzer 14, pressure in the electrolyzer 14, voltage applied to the electrolyzer 14, or current flowing in the electrolyzer 14. The controller 27 may further sample a number of transitions to the stop mode and the present operation mode, and provide same to the information processing device 10.

The control device 13 may be an information processing device, such as a server. The control device 13 may be incorporated into the controller 27 of the information processing device 10 or any of the electrolysis devices 12 included in the production system 11.

The control device 13 may determine to switch the operation mode of at least one electrolysis device 12 based on the operation plan obtained from the information processing device 10. The control device 13 may further determine to switch the drive mode based on actual electrical power supplied to the production system 11.

The operation plan may include, at a minimum, a point in time for each electrolysis device 12 to switch from the stop mode to the start-up mode. The operation plan may further include a point in time to switch from the drive mode to the stop mode. In a configuration where the electrolysis device 12 has the prepare-to-stop mode, the operation plan may include a point in time for switching from the drive mode to the prepare-to-stop mode instead of a point in time for switching from the drive mode to the stop mode. In a configuration where the production system 11 includes a plurality of the electrolysis device 12, switching from the drive mode to the stop mode or the prepare-to-stop mode may be associated with a priority.

The control device 13 may determine to switch the electrolysis device 12 specified in the operation plan to the start-up mode, for example, when a time timed by a timer or the like provided in the control device 13 is at a point of switching from the stop mode to the start-up mode. Upon determining to switch to the start-up mode, the control device 13 may provide an instruction to the electrolysis device 12 to switch to the start-up mode.

The control device 13 may determine to switch the electrolysis device 12 specified in the operation plan to the stop mode, for example, when a time timed by a timer or the like provided in the control device 13 is at a point of switching from the drive mode to the stop mode. Upon determining to switch to the stop mode, the control device 13 may provide an instruction to the electrolysis device 12 to switch to the stop mode.

The control device 13 may further determine to switch to the stop mode based on electrical power supplied to the production system 11. In a configuration where the production system 11 includes a single electrolysis device 12, the control device 13 may determine to switch to the stop mode based on the operation plan and a value of electrical power currently supplied to the production system 11, as described below. The control device 13 may determine to switch to the stop mode when the particular electrolysis device 12 is at a point of switching from the drive mode to the stop mode and the first state cannot be maintained. In a configuration where the production system 11 includes a plurality of the electrolysis device 12, the control device 13 may determine to switch to the stop mode based on the operation plan and a value of electrical power currently supplied to the production system 11, as described below. The control device 13 may determine to switch to the stop mode when a particular electrolysis device 12 is at a point of switching from the drive mode to the stop mode, and the first state cannot be maintained for the particular electrolysis device 12 without decreasing electrical power supply to another electrolysis device 12 that has a higher priority than the particular electrolysis device 12.

In a configuration where the electrolysis device 12 has the prepare-to-stop mode as an operation mode, the control device 13 may determine to switch the electrolysis device 12 specified in the operation plan to the prepare-to-stop mode when the time comes to switch from the drive mode to the prepare-to-stop mode. Upon determining to switch to the prepare-to-stop mode, the control device 13 may provide an instruction to the electrolysis device 12 to switch to the prepare-to-stop mode.

The control device 13 may further determine to switch to the prepare-to-stop mode based on electrical power supplied to the production system 11. The determination based on the electrical power is the same as the determination based on electrical power in the stop mode.

The information processing device 10 is, for example, a server device. The information processing device 10 creates an operation plan for the electrolysis device 12, or in other words at least one electrolysis device 12, included in the production system 11. As illustrated in FIG. 1, the information processing device 10 includes an acquisition unit 28 and a control unit 29. The information processing device 10 may further include a storage unit 30.

The acquisition unit 28 acquires the predicted value of electrical power supplied to all of the electrolysis devices 12 in the production system 11. The predicted value of electrical power includes at least a first amount of electrical power that can be supplied from a power generation facility powered solely by renewable energy. The predicted value of electrical power may include only the first amount of electrical power. The predicted value of electrical power may further include an amount of electrical grid power that can be supplied from the electrical grid. The acquisition unit 28 may include a communication module that communicates with another information processing device via a network. For example, the acquisition unit 28 acquires, from an information processing device managed by a renewable energy power business operator, for example, a predicted value of electrical power to be generated per hour for the next week as the first amount of electrical power. When the renewable energy source is solar or wind, the predicted value of electrical power may be based on a weather forecast. The weather forecast includes, for example, environmental forecast data such as solar radiation, wind speed, wind direction, and the like near the electrolysis device. For example, the acquisition unit 28 acquires the amount of available electrical power from the information processing device of the business operator that manages the electrical grid as the amount of electrical grid power based on a purchase agreement or the like, or a demand response control for the purpose of adjusting supply and demand of electrical grid power.

The acquisition unit 28 acquires a minimum required amount for production of the target product in the production system 11. The target product may be a cathode product and may be an anode product. The target product may be hydrogen, the cathode product in water electrolysis. The target product may be chlorine, the anode product in brine electrolysis. The minimum required amount may be a value up to a specified point in time. The acquisition unit 28 may include an interface for input that can detect input from the user, such as a keyboard, mouse, or the like. For example, the acquisition unit 28 acquires the minimum required amount for production of the target product via input to the interface for input.

The acquisition unit 28 may acquire a process state regarding an operation property from the at least one electrolysis device 12. The acquisition unit 28 may acquire from the at least one electrolysis device 12 the number of transitions to the stop mode and the present operation mode.

The storage unit 30 may include semiconductor memory, magnetic memory, and optical memory. Examples of semiconductor memory include random access memory (RAM), read-only memory (ROM), and the like. The storage unit 30 may function as a main storage device, an auxiliary storage device, or a cache memory. The storage unit 30 stores data used in operation of the production system 11 and data obtained from work of the electrolysis device 12.

The storage unit 30 may store a system program, an application program, embedded software, and the like. The storage unit 30 may store a process state, number of transitions to the stop mode, and present operation mode of each electrolyzer 14, as acquired by the acquisition unit 28.

Further, the storage unit 30 may store electrolysis performance of each electrolysis device 12 included in the production system 11, the current lower limit value or the electrical power lower limit value, and the amount of target product generated relative to the current flowing in the electrolyzer 14. Electrolysis performance is the response of output voltage to input current and is a value specific to the electrolyzer 14. The current lower limit value is the minimum value of current flowing in the electrolyzer 14 to keep the anode product concentration in the cathode product (for example, oxygen concentration in hydrogen) in the cathode chamber and the cathode product concentration in the anode product (for example, hydrogen concentration in oxygen) in the anode chamber at the explosion limit or below. Electrolysis performance may be estimated based on operational experience using a test device or an actual device. The current lower limit value may be estimated based on a theoretical value or operational experience using a test device or an actual device. The electrical power lower limit value may be estimated based on a theoretical value or operational experience using a test device or an actual device. Alternatively, the electrical power lower limit value may be calculated based on the current lower limit value and the electrolysis performance.

Electrolysis performance degrades with an increase in the number of stops, and output voltage relative to input current increases. The storage unit 30 may store an adjustment parameter for adjustment relative to degradation of electrolysis performance according to the number of stops based on a process state such as current, temperature, electrolytic solution concentration, pressure, circulating flow rate of electrolyte solution, anode product concentration in cathode product in the cathode chamber, and cathode product concentration in anode product in the anode chamber, as well as at least one of current flow time and the number of transitions to the stop mode (hereinafter also referred to as the "number of stops"). The adjustment parameter relative to a process state may be pre-calculated based on actual cell voltage measurements in a test device or an actual device under various process states at current flow times and number of stops that can be considered constant. The adjustment parameter relative to current flow time and number of stops may be predetermined based on actual cell voltage measurements in a test device or an actual device at various current flow times and number of stops under the same process state.

The current lower limit value increases as the electrolyzer degrades. The storage unit 30 may store an adjustment parameter for adjusting the increase in the current lower limit value in response to degradation of the electrolyzer based on a process state such as voltage, temperature, electrolyte solution concentration, pressure, circulating flow rate of the electrolyte solution, anode product concentration in cathode product in the cathode chamber, and cathode product concentration in anode product in the anode chamber, as well as at least one of current flow time and the number of stops. The adjustment parameter relative to a process state may be pre-calculated based on actual measurements of anode product concentration in cathode product in the cathode chamber and cathode product concentration in anode product in the anode chamber of a test device or an actual device under various process states at current flow times and number of stops that can be considered constant. The adjustment parameter relative to current flow time and number of stops may be predetermined based on actual measurements of anode product concentration in cathode product in the cathode chamber and cathode product concentration in anode product in the anode chamber in a test device or an actual device at various current flow times and number of stops under the same process state.

The electrical power lower limit value increases as the electrolyzer degrades. The electrical power lower limit value can be calculated based on electrolysis performance adjusted by the adjustment parameter described above and the current lower limit value adjusted by the adjustment parameter described above. Accordingly, the electrical power lower limit value can be adjusted based on a process state such as voltage, temperature, electrolyte solution concentration, pressure, electrolyte solution circulation flow rate, anode product concentration in cathode product in the cathode chamber, cathode product concentration in anode product in the anode chamber, and at least one of current flow time and the number of stops. The storage unit 30 may store an adjustment parameter to adjust the electrical power lower limit value.

The control unit 29 includes one or more processors and memory. Examples of the one or more processors include a general-purpose processor that is loaded with a specific program to execute a specific function, and a specialized processor dedicated to specific processing. The control unit 29 controls overall operation of the information processing device 10.

The control unit 29 creates an operation plan for the electrolysis device 12 included in the production system 11. The control unit 29 may create an operation plan for a single electrolysis device 12 and may create an operation plan for a plurality of the electrolysis device 12. The operation plan may include, for each of the at least one electrolysis device 12, at least one of time of switching from the stop mode to the start-up mode or current value or electrical power to supply to the electrolyzer 14.

The control unit 29 creates a provisional operation plan in which the number of stops and electrical power per unit of production satisfy a defined condition while using the predicted value or less of electrical power and supplying the target product at the minimum required amount or more by a specified time. The number of stops is the number of times switching directly or indirectly from the drive mode to the stop mode. Switching from the drive mode to the stop mode indirectly means switching from the drive mode to the stop mode via the prepare-to-stop mode. In a configuration where the production system 11 includes a plurality of the electrolysis device 12, the number of stops is the sum of the number of stops for each of the plurality of the electrolysis device 12. The electrical power per unit of production is the electrical power consumption of the electrolysis device 12 divided by the amount of target product supplied. In a configuration where the production system 11 includes a plurality of the electrolysis device 12, the electrical power per unit of production is the sum of the electrical power consumption of each of the plurality of the electrolysis device 12 divided by the sum of the amount of the target product supplied by each of the plurality of the electrolysis device 12. Electrical power consumption is the electrical power consumed by the electrolysis device 12 up to a specified point in time.

The defined condition may be to minimize the electrical power per unit of production among at least one temporary operation plan in which the number of stops is minimized while using the predicted value or less of electrical power and supplying the target product at the minimum required amount or more. Specifically, the control unit 29 may use any mathematical optimization method to create a temporary operation plan that minimizes the number of stops while using predicted value or less of electrical power and supplying the minimum required amount or more of the target product. It is assumed that a plurality of temporary operation plans each having a minimum number of stops will be created. Further, the control unit 29 may create a provisional operation plan by selecting the operation plan with the minimum electrical power per unit of production among the temporary operation plans with the minimum number of stops.

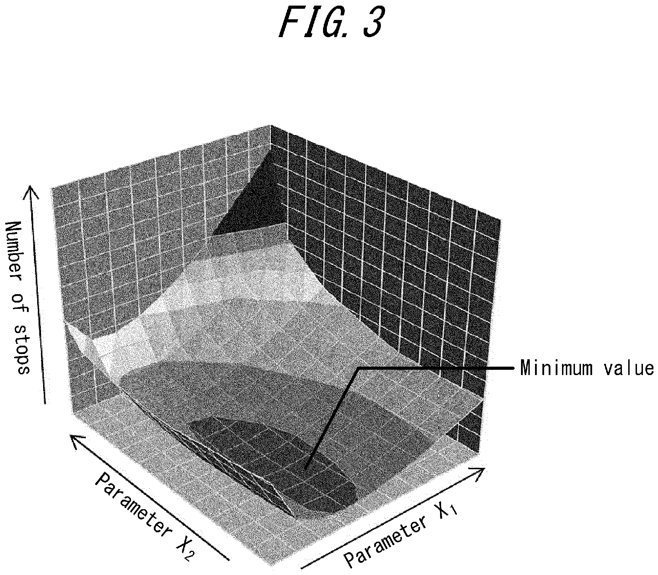

Mathematical optimization methods are explained in detail by the following examples. For mathematical optimization, an operation simulation is pre-designed that outputs the number of stops and electrical power per unit of production of the electrolysis device 12 when any parameter is entered for the operation of a single or a plurality of the electrolysis device 12. The control unit 29 may vary any parameter for the operation simulation to minimize the number of stops. For example, the control unit 29 may calculate the minimum value of an output result of an operation simulation in which any parameter is varied in any range. Further, as illustrated in FIG. 3, the control unit 29 may create an approximation model using response surface methodology from output results of an operation simulation in which any parameters X1 and X2 are varied within any range, and estimate the minimum value using the approximation model.

Further, the defined condition may be to minimize an evaluation value EV = α × BUn/BUs + β × Nn/Ns. Here, α and β are weighting factors greater than zero. BUn and Nn are the electrical power per unit of production and the number of stops, respectively, for each of a plurality of operation plans that use the predicted value or less of electrical power and supply the minimum required amount or more of the target product. BUs and Ns are the electrical power per unit of production and the number of stops, respectively, in the temporary operation plan in which the electrical power per unit of production is minimized while using the predicted value or less of electrical power and supplying the target product at the minimum required amount or more. Specifically, the control unit 29 may use any mathematical optimization method to create a temporary operation plan that minimizes the electrical power per unit of production while using the predicted value or less of electrical power and supplying the minimum required amount or more of the target product. The control unit 29 may set the electrical power per unit of production and the number of stops in the temporary operation plan to BUs and Ns, respectively. After creating temporary operation plans, the control unit 29 may calculate evaluation value EVn by setting BUn and Nn to the electrical power per unit of production and the number of stops in a plurality of operation plans that use the predicted value or less of electrical power and supply the minimum required amount or more of the target product. The control unit 29 may use any mathematical optimization method to create the operation plan with the evaluation value EVn that is a minimum value as a provisional operation plan.

Further, the defined condition may be to minimize the number of stops and locally minimize the electrical power per unit of production while using electrical power at the predicted value or less and supplying the target product at the minimum required amount or more. Specifically, the control unit 29 may use any mathematical optimization method to create a provisional operation plan that minimizes the number of stops and locally minimizes the electrical power per unit of production while using the predicted value or less of electrical power and supplying the minimum required amount or more of the target product.

Further, the control unit 29 creates an operation plan that corresponds to the number of stops and the electrical power per unit of production in the provisional operation plan. The operation plan corresponding to the number of stops and the electrical power per unit of production in the provisional operation plan may be, for example, the provisional operation plan itself. However, the operation plan corresponding to the number of stops and the electrical power per unit of production in the provisional operation plan is not limited to the provisional operation plan, and may be an operation plan that results in a number of stops and an electrical power per unit of production within a range from the number of stops and the electrical power per unit of production, respectively. For example, the control unit 29 may create an operation plan corresponding to the number of stops and electrical power per unit of production in the provisional operation plan by the following method. The control unit 29 may determine that the number of stops and the electrical power per unit of production in the provisional operation plan are the minimum number of stops and the minimum electrical power per unit of production, respectively. The control unit 29 may determine that the number of stops and the electrical power per unit of production in the provisional operation plan that maximize supply of the target product are the maximum number of stops and maximum electrical power per unit of production, respectively. The control unit 29 may create an operation plan that satisfies specific conditions, in which the number of stops is within the lowest 10 % from the minimum side in the range from the maximum number of stops to the minimum number of stops, and the electrical power per unit of production is within the lowest 10 % from the minimum side in the range from the minimum electrical power per unit of production to the maximum electrical power per unit of production, as an operation plan corresponding to the number of stops and the electrical power per unit of production in the provisional operation plan. The specific conditions are not limited to, but include, for example, local minimization of electrical power per unit of production, local maximization of facility utilization, and response to demand response control of an electrical grid.

The control unit 29 may adjust the weighting factors α and β in the creation of the operation plan by minimizing the evaluation value EV. The weighting factors α and β may be based on operational input to an input device such as a keyboard, mouse, or the like provided to the information processing device 10. For example, when suppression of electrolysis device degradation is a priority, β may be adjusted to be larger than α so that Nn/Ns affects EV more than BUn/BUs. Alternatively, when maximizing target product production is a priority, α may be adjusted to be larger than β so that BUn/BUs affects EV more than Nn/Ns.

The control unit 29 may use a combination of the electrolysis performance of the electrolyzer 14 and the current lower limit value or the electrical power lower limit value in creating the operation plan. Specifically, the control unit 29 calculates a voltage value that causes the current in the electrolyzer 14 to be at least the current lower limit value, based on the electrolysis performance of each electrolyzer 14. The control unit 29 calculates the electrical power required in the start-up mode and the drive mode based on the voltage value and the current value. The control unit 29 may create an operation plan based on the calculated electrical power or electrical power lower limit value.

The control unit 29 may use the present operation mode of each electrolyzer 14 to create an operation plan. For example, the electrolysis device 12 where the operation mode is the drive mode calculates electrical power per unit of production without including power consumption in the start-up mode, which is used to calculate overall electrical power per unit of production.

The control unit 29 may adjust the electrolysis performance of the present electrolyzer 14 according to the current flow time and number of stops of each electrolyzer 14. The control unit 29 may adjust the electrolysis performance of the present electrolyzer 14 based on the process state of each electrolyzer 14. The control unit 29 may adjust the current lower limit value of the present electrolyzer 14 according to the current flow time and number of stops of each electrolyzer 14. The control unit 29 may adjust the current lower limit value or the electrical power lower limit value of the present electrolyzer 14 based on the process state of each electrolyzer 14. Accordingly, the control unit 29 may adjust the current lower limit value or the electrical power lower limit value based on the process state so that the concentration of gas in the electrolyzer 14 of at least one electrolysis device 12 is the explosion lower limit or less.

When the predicted value of electrical power acquired includes an updated value for a time period for which the predicted value has already been acquired, the control unit 29 may update the operation plan using the updated value. For example, the control unit 29 may set the minimum required amount for the updated operation plan to be the minimum required amount up to a specified time point in the previously created operation plan minus the production amount of the target product up to the present, and use the updated predicted value to update the time period included in the previous operation plan and create a new time period not included in the previous operation plan.

The control unit 29 may create, as an operation plan corresponding to minimized or locally minimized electrical power per unit of production, an operation plan corresponding to the sum of voltages applied to the electrolyzer 14 of at least one electrolysis device 12 in an operation plan that attempts to locally minimize the sum of the voltages applied.

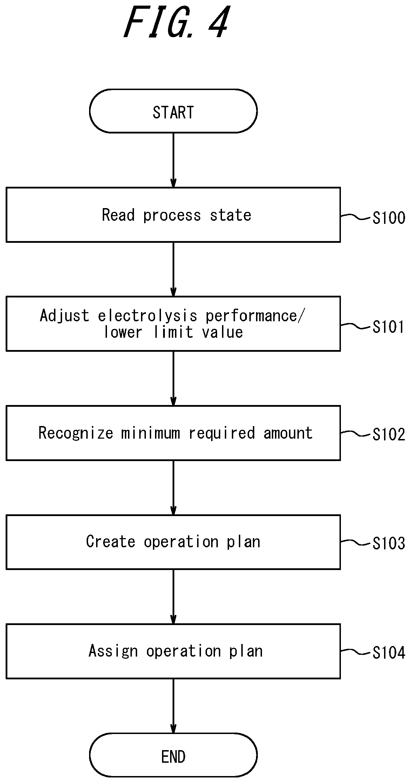

Next, the flowchart in FIG. 4 is used to explain the operation plan creation process executed by the control unit 29 of the information processing device 10 according to the present embodiment. The operation plan creation process is initiated, for example, each time the predicted value of electrical power is updated, or periodically as the predicted value of electrical power is updated.

In step S100, the control unit 29 reads the process status of each electrolysis device 12 stored in the storage unit 30. After reading, the process proceeds to step S101.

In step S101, the control unit 29 adjusts the electrolysis performance of the electrolyzer 14 in each electrolysis device 12 based on the process state read out in step S100. The control unit 29 adjusts the current lower limit value or the electrical power lower limit value to be applied to the electrolyzer 14 in each electrolysis device 12 based on the process state read in step S100. After adjustment, the process proceeds to step S102.

In step S102, the control unit 29 recognizes the minimum required amount of production of the target product acquired by the acquisition unit 28. After recognition, the process proceeds to step S103.

In step S103, the control unit 29 creates an operation plan based on the electrolysis performance of each electrolyzer 14 and the current lower limit value of each electrolyzer 14 adjusted in step S101 and the minimum required amount recognized in step S102. After creation, the process proceeds to step S104.

In step S104, the control unit 29 assigns the operation plan created in step S103 to the control device 13. After assignment, the operation plan creation processing ends.

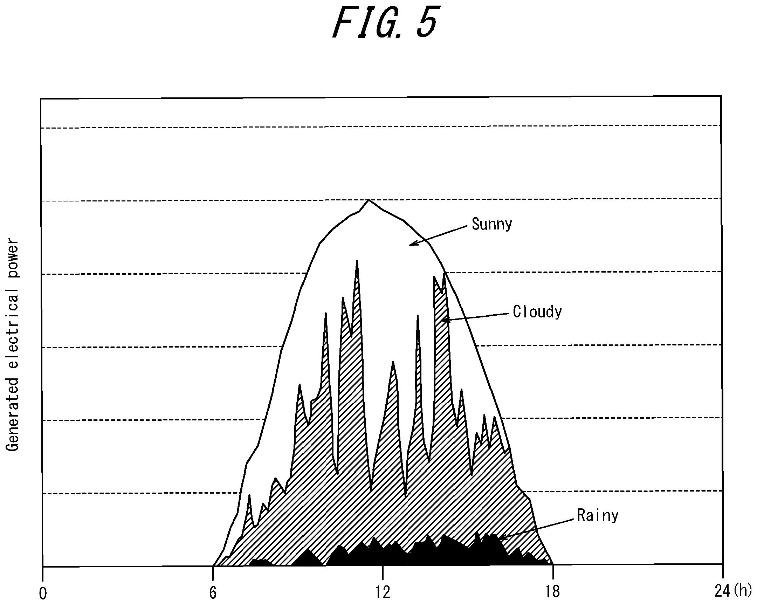

The information processing device 10 according to the present embodiment, configured as described above, includes the acquisition unit 28 that acquires the predicted value of electrical power supplied to the electrolysis device 12 and the minimum required amount of the target product to be produced, and the control unit 29 that creates an operation plan corresponding to the number of stops and the electrical power per unit of production in a provisional operation plan in which the number of stops and the electrical power per unit of production satisfy a defined condition while using the predicted value or less of electrical power and supplying the target product at the minimum required amount or more. As mentioned above, in the stop mode, the electrolysis device 12 is filled with purge gas in the first supply channel 17, the second supply channel 21, or the like, and therefore the target product cannot be supplied while consuming electrical power during the start-up mode until the purge gas is replaced with the target product. Accordingly, in the electrolysis device 12, the electrical power per unit of production increases when the drive mode supplying the target product is short. Further, power generation based on renewable energy is unstable, and the electrical power generated by such power generation fluctuates. For example, as illustrated in FIG. 5, when the renewable energy is solar power, the electrical power generated fluctuates greatly depending on the weather conditions. Accordingly, in a configuration that uses electrical power generated from renewable energy for the electrolysis device 12, it can occur that the electrolysis device 12 frequently transitions from the drive mode to the stop mode during inclement weather conditions. Thus, the electrolysis device 12 that directly uses electrical power generated from renewable energy not only increases the electrical power per unit of production relative to the amount of target product supplied, but also increase the number of stops relative to the amount of target product supplied. In the electrolysis device 12, the more frequent the number of stops, the more electrodes degrade, leading not only to a further increase in electrical power per unit of production but also to shortening of life span of the electrodes. In response, the information processing device 10 having the configuration described above can make it possible to suppress the electrical power consumption per unit of production while producing the target product at the minimum required amount or more. Further, the information processing device 10 can decrease the number of stops.

Further, in the information processing device 10, the defined condition may be to minimize the electrical power per unit of production among at least one temporary operation plan in which the number of stops is minimized while using the predicted value or less of electrical power and supplying the target product at the minimum required amount or more. According to such a configuration, the information processing device 10 can suppress the electrical power consumption per unit of production while oriented toward minimizing the number of stops.

Further, in the information processing device 10, the defined condition may be to minimize the evaluation value EV = α × BUn/BUs + β × Nn/Ns, where BUs is the electrical power per unit of production and Ns is the number of stops in a temporary operation plan in which the electrical power per unit of production is minimized while using electrical power at the predicted value or less and supplying the target product at the minimum required amount or more, BUn is the electrical power per unit of production and Nn is the number of stops in each of a plurality of the operation plan that each use electrical power at the predicted value or less and supply the target product at the minimum required amount or more, and α and β are weighting factors greater than zero. According to such a configuration, the information processing device 10 can suppress the number of stops while oriented toward minimizing the electrical power per unit of production.

Further, in the information processing device 10, the defined condition may be to minimize the number of stops and locally minimize the electrical power per unit of production while using electrical power at the predicted value or less and supplying the target product at the minimum required amount or more. The number of stops is a positive integer, and therefore it can occur that the number of stops is a minimum value for any range of any explanatory variable for operation plan creation. Accordingly, the electrical power per unit of production may be locally minimized in any range of any explanatory variable. For such situations, the information processing device 10 having the configuration described above can suppress the electrical power consumption per unit of production while oriented toward minimizing the number of stops.

Further, the information processing device 10 according to the present embodiment is capable of creating an operation plan for a plurality of the electrolysis device 12. According to such a configuration, for example, when it is expected that the generated electrical power will decrease when a plurality of the electrolysis device 12 is in the drive mode, the information processing device 10 can provide diversity to a drive pattern by continuing the drive mode of some portion of the electrolysis devices 12 that have good electrical power consumption per unit of production and switching other electrolysis devices 12 to the stop mode, rather than stopping all of the electrolysis devices 12.

Further, upon acquiring an update of the predicted value, the information processing device 10 according to the present embodiment updates the operation plan. According to such a configuration, the information processing device 10 updates the operation plan using the updated predicted value, which typically has higher prediction precision than the predicted value before the update, thereby improving the feasibility of minimizing the number of stops in actual operation and minimizing the electrical power per unit of production or locally minimizing the electrical power per unit of production.

Further, the information processing device 10 according to the present embodiment creates the operation plan corresponding to the sum of voltages in the operation plan that locally minimizes the sum of the voltages applied to the electrolyzers 14 of at least one electrolysis device 12. According to such a configuration, the information processing device 10 can minimize or locally minimize the electrical power per unit of production by a simpler method.

Further, the information processing device 10 according to the present embodiment acquires a process state regarding an operation property from the at least one electrolysis device 12 and adjusts the current lower limit value or the electrical power lower limit value so that concentration of gas in the electrolyzer 14 of the at least one electrolysis device 12 is the explosion lower limit or less, based on the process state. According to such a configuration, the information processing device 10 can contribute to minimizing the number of stops and minimizing the electrical power per unit of production or locally minimizing the electrical power per unit of production while maintaining safety in accordance with the degradation of a membrane and electrodes of the electrolyzer 14.

Further, in the information processing device 10 according to the present embodiment, the predicted value of electrical power acquired by the acquisition unit 28 includes a first amount of electrical power that can be supplied from a power generation facility using only renewable energy and an amount of electrical grid power that can be supplied from an electrical grid. According to such a configuration, the information processing device 10 can create an operation plan that further decreases the number of stops by using electrical grid power.

Although the above describes an embodiment of the information processing device 10, an embodiment of the present disclosure can also be implemented as a method or program for execution by a device, as well as a storage medium in which the program is recorded (examples include an optical disk, an optical-magnetic disk, a CD-ROM, a CD-R, a CD-RW, a magnetic tape, a hard disk, a memory card, and the like).

Further, as a program embodiment, embodiments are not limited to an application program such as object code compiled by a compiler or program code executed by an interpreter, and may be a program module or the like incorporated into an operating system. Further, a program may or may not be configured so that all processing is performed only in a CPU on a control board. A program may be configured to be implemented in whole or in part by another processing unit mounted on an expansion board or expansion unit added to a board as required.

The drawings illustrating embodiments of the present disclosure are schematic. Dimensional ratios and the like of the drawings do not necessarily correspond to actual implementations.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component or the like may be rearranged, and multiple components or the like may be combined into one or divided, as long as no logical inconsistency results.

All of the component requirements described in the present disclosure and/or all of the disclosed methods or all of the steps of processing may be combined in any combination, except for combinations where features are mutually exclusive. Further, each of the features described in the present disclosure may be replaced by alternative features that work for the same, equivalent, or similar purposes, unless explicitly contradicted. Therefore, unless explicitly contradicted, each of the disclosed features is merely an example of a comprehensive set of identical or equivalent features.

Further, embodiments according to the present disclosure are not limited to any of the specific configurations of the embodiments described above. The embodiments according to the present disclosure may be extended to all novel features described, or combinations thereof, or all novel methods or processing steps described, or combinations thereof.

### REFERENCE SIGNS LIST

- 10: information processing device
- 11: production system
- 12: electrolysis device
- 13: control device
- 14: electrolyzer
- 15: electrolyte solution supply channel
- 16: rectifier
- 17: first supply channel
- 18: first supply valve
- 19: first exhaust channel
- 20: first exhaust valve
- 21: second supply channel
- 22: second supply valve
- 23: second exhaust channel
- 24: second exhaust valve
- 25: purge gas supply channel
- 26: purge gas supply valve
- 27: controller
- 28: acquisition unit
- 29: control unit
- 30: storage unit

## Claims

1. An information processing device that creates an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the information processing device comprising:
an acquisition unit configured to acquire a predicted value of electrical power to be supplied to the electrolysis device and a minimum required amount for supply of the target product; and
a control unit configured to create the operation plan corresponding to a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times the electrolysis device switches from the drive mode to the stop mode and the electrical power per unit of production is power consumption of the electrolysis device divided by amount of target product supplied.

2. The information processing device according to claim 1, wherein
the defined condition is to minimize the electrical power per unit of production among at least one temporary operation plan in which the number of stops is minimized while using the predicted value or less of electrical power and supplying the target product at the minimum required amount or more.

3. The information processing device according to claim 1, wherein
the defined condition is to minimize an evaluation value EV = α × BUn/BUs + β × Nn/Ns, where BUs is the electrical power per unit of production and Ns is the number of stops in a temporary operation plan in which the electrical power per unit of production is minimized while using electrical power at the predicted value or less and supplying the target product at the minimum required amount or more, BUn is the electrical power per unit of production and Nn is the number of stops in each of a plurality of the operation plan that each use electrical power at the predicted value or less and supply the target product at the minimum required amount or more, and α and β are weighting factors greater than zero.

4. The information processing device according to claim 1, wherein
the defined condition is to minimize the number of stops and locally minimize the electrical power per unit of production while using electrical power at the predicted value or less and supplying the target product at the minimum required amount or more.

5. The information processing device according to any one of claims 1 to 4, wherein
the electrolysis device further has a start-up mode in which supply of the target product is stopped in the first state until the operation mode transitions to the drive mode.

6. The information processing device according to claim 5, wherein
the operation plan includes, for each of the at least one electrolysis device, at least one of time of switching from the stop mode to the start-up mode or current value to supply to an electrolyzer.

7. The information processing device according to any one of claims 1 to 6, wherein
the control unit is capable of creating the operation plan for a plurality of the electrolysis device,
the electrical power per unit of production is the sum of the electrical power consumption of each of the plurality of the electrolysis device divided by the sum of the amount of the target product supplied by each of the plurality of the electrolysis device, and
the number of stops is the sum of the number of stops for each of the plurality of the electrolysis device.

8. The information processing device according to any one of claims 1 to 7, wherein
upon acquiring an update of the predicted value, the control unit updates the operation plan.

9. The information processing device according to any one of claims 1 to 8, wherein
the control unit creates the operation plan corresponding to the sum of voltages in the operation plan that locally minimizes the sum of the voltages applied to electrolyzers of the at least one electrolysis device.

10. The information processing device according to any one of claims 1 to 9, wherein
the acquisition unit acquires a process state regarding an operation property from the at least one electrolysis device, and
the control unit adjusts the current lower limit value or the electrical power lower limit value based on the process state so that a concentration of a gas in an electrolyzer of the at least one electrolysis device is an explosion lower limit or less.

11. The information processing device according to any one of claims 1 to 10, wherein
the predicted value of electrical power acquired by the acquisition unit includes a first amount of electrical power that can be supplied from a power generation facility using only renewable energy and an amount of electrical grid power that can be supplied from an electrical grid.

12. At least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the electrolysis device comprising:
an acquisition unit configured to acquire a predicted value of electrical power to be supplied to the electrolysis device and a minimum required amount for supply of the target product; and
a control unit configured to create an operation plan corresponding to a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times switching from the drive mode to the stop mode and the electrical power per unit of production is power consumption of the electrolysis device divided by amount of target product supplied.

13. A plan creation method of creating an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the plan creation method comprising:
a step of acquiring a predicted value of electrical power to be supplied to the electrolysis device and a minimum required amount for supply of the target product;
a step of calculating a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the number of times the electrolysis device switches from the drive mode to the stop mode and the electrical power per unit of production is power consumption of the electrolysis device divided by amount of target product supplied; and
a step of creating the operation plan corresponding to the number of stops and the electrical power per unit of production.

14. A program configured to create an operation plan for at least one electrolysis device that has, as operation modes, a drive mode in which a target product can be supplied by the electrolysis device in a first state in which electrical power where current is at least a current lower limit value is supplied or electrical power that is at least an electrical power lower limit value is supplied, and a stop mode in which work is stopped in a second state in which supply of electrical power where current is at least the current lower limit value or electrical power that is at least the electrical power lower limit value is stopped, the program causing a computer to execute operations comprising:
acquiring a predicted value of electrical power to be supplied to the electrolysis device and a minimum required amount for supply of the target product;
calculating a number of stops and an electrical power per unit of production in a provisional operation plan in which the number of stops and the electrical power per unit of production satisfy a defined condition while using the predicted value or less of electrical power and supplying the target product at the minimum required amount or more, where the number of stops is the minimized number of times the electrolysis device switches from the drive mode to the stop mode and the electrical power per unit of production is power consumption of the electrolysis device divided by amount of target product supplied; and
creating the operation plan corresponding to the number of stops and the electrical power per unit of production.
